# EUROPEAN PATENT APPLICATION

(11) **EP 1 262 103 A1**
(43) Date of publication of application: **04.12.2002**
(21) Application number: 01201978.2
(22) Date of filing: 25.05.2001
(51) Int. Cl.: A22C 29/00

(54) **A method of and an apparatus for sorting shellfish**

(71) Applicant: Vilsund Muslinge Industri A/S, 7900 Nykoebing Mors (DK)
(72) Inventor: Kaergaard, Poul, 7752 Snedsted (DK)
(74) Representative: Elmeros, Claus

(57) **Abstract**

The invention relates to a method of and an apparatus for sorting shellfish comprising the steps of
- transferring the shellfish to an inclined surface,
- exerting force on the shellfish on said surface in an at least partially upwardly inclined direction and at least partially parallel with the inclined surface,
- collecting the shellfish leaving said surface at or near an upper end and/or at or near a lower end of the surface.

Hereby, shellfish which differ in one or more characteristics such as species, size, shape, weight and/or other characteristics will perform differently on the sloping surface due to the influence of the force exerted upon the shellfish whereby a separation of the shellfish according to different characteristics will be performed.

## Description

### Field of the invention

The invention relates to a method of sorting shellfish according to the preamble of claim 1 and an apparatus for sorting shellfish according to the preamble of claim 6.

### Background of the invention

Shellfish, for example mussels, scallops, clams, oysters etc. are normally caught and/or cultivated and used for food purposes. In connection with such purposes, it may be necessary to perform some kind of sorting or separation. For example, it is common practice to sort shellfish according to size, and machinery has been developed for such sorting processes.

However, when caught, it often happens that shellfish of two or more types, e.g. species, are comprised in a single catch, and for some purposes, it will be necessary or advantageous to separate these types from each other or to separate one type of shellfish from the other type or types.

Since mechanical separation processes for sorting shellfish according to type, e.g. according to species etc., are not available, it has been necessary to perform some sort of manual sorting or separation when a batch of shellfish containing two or more different types is to be processed for example for human food purposes. This inevitably leads to higher costs whereby use of such batches of shellfish containing different types of shellfish is sought to be avoided and/or whereby the income from such batches is minimal.

Thus, there has been a need to provide an efficient and especially a cost-efficient way of performing such a sorting process.

Recently, it has been suggested that an electronic sorting or separation process based upon an electronic color separation process may be used. However, experiments have not been promising, as some sort of discoloring of the shells of the shellfish may be present, for example from algae growth or some other sort of coating, giving reason to a far from satisfactory quality of the result. Further, the electronic color separation process will give rise to relatively large added expenses which makes the process less advantageous.

### Summary of the invention

It is thus an object of the invention to provide a method and an apparatus whereby shellfish may be separated according to type, e.g. according to species, size, shape, weight, and/or characteristics in an effective and especially cost-effective manner.

Further, it is an object of the invention to provide such a sorting or separation process, whereby a high-quality end product, e.g. a batch/batches or a flow of shellfish containing no or only few numbers of shellfish of a different type or types, is obtained.

These and other objects are achieved by the invention as explained in the following.

As specified in claim 1, the invention relates to a method of sorting shellfish comprising the steps of
- transferring the shellfish to an inclined surface,
- exerting force on the shellfish on said surface in an at least partially upwardly inclined direction and at least partially parallel with the inclined surface,
- collecting the shellfish leaving said surface at or near an upper end and/or at or near a lower end of the surface.

Hereby, shellfish which differ in one or more characteristics such as species, size, shape, weight and/or other characteristics will perform differently on the sloping surface due to the influence of the force exerted upon the shellfish and to gravity. Some will roll and/or slide downwards while others will be transported to the top of the surface. In this way, it has been proven that a separation will be achieved, whereby the shellfish will be separated, at least to a certain degree, in two different fractions.

When, as specified in claim 2, said force exerted on the shellfish on the surface is produced by the surface or by a part of said surface, e.g. the surface of a conveyor belt or similar transport means moving in an upwardly inclined direction, an advantageous embodiment has been achieved, whereby the force exerted on the shellfish will be produced in an surprisingly simple and efficient manner.

When, as disclosed in claim 3, the inclination of said surface is adjustable, preferably within the range of 5° - 35°, and/or whereby the force exerted by the surface, e.g. by moving the surface, may be adjustable, e.g. by adjusting the speed of said surface or said part of the surface, preferably within the range of 20 m/min - 100 m/min, a further advantageous embodiment is achieved. Hereby, the process may be performed under such user-specified circumstances that the result of the separation will be in accordance with the needs of the user and in accordance with the different types of shellfish involved in the actual sorting process.

Further, as specified in claim 4, the steps of
- transferring the shellfish to an inclined surface,
- exerting force on the shellfish on said surface in an upwards direction and at least partially parallel with the inclined surface,
- collecting the shellfish leaving said surface at an upper and/or a lower end of the surface
   may be repeated at least one time for shellfish leaving a first surface at the upper end and/or at the lower end, and whereby the repeated steps may be performed by using a further inclined surface or further inclined surfaces, e.g. a second, a third etc. inclined surface. Hereby, an improved quality of the sorting process may be achieved as a certain fraction of the shellfish of the type to be separated from the main flow may be separated in the first process. In the next process, a further fraction of the remaining number of shellfish of the type to be separated from the main flow may be separated etc. until a satisfactory result is achieved.

When, as specified in claim 5, the inclination of the surface and/or the force exerted, e.g. the speed of said surface or a part of said surface, may be adjusted individually for the first surface and/or for said further inclined surface or said further inclined surfaces, another advantageous embodiment of the invention is achieved, whereby the sorting process may be fine-tuned step by step, providing an even further improvement in the quality of the sorting process.

As stated above, the invention also pertains to an apparatus for sorting shellfish as stated in claim 6, said apparatus comprising
- an inclined surface,
- means for transferring shellfish to the inclined surface,
- means for exerting force on the shellfish on said surface in an at least partially upwardly inclined direction and at least partially parallel with the inclined surface, and
- means for collecting the shellfish leaving said surface at or near an upper end and at or near a lower end of the surface.

Hereby, an apparatus is provided, whereby shellfish which differ in one or more characteristics such as species, size, shape, weight and/or other characteristics will perform differently on the sloping surface due to the influence of the force exerted upon the shellfish and to gravity. Some will roll and/or slide downwards while others will be transported to the top of the surface. In this way, it has been proven that a separation will be achieved by the apparatus, whereby the shellfish will be separated, at least to a certain degree, in two different fractions by the apparatus.

When, as stated in claim 7, the apparatus comprises a conveyor belt and when a part of said conveyor belt constitutes said inclined surface, which may be arranged at an inclination in a preferred range of 5° - 35°, an advantageous embodiment has been provided, whereby the force exerted on the shellfish will be produced in a surprisingly simple and efficient manner, and whereby the sorting or separation apparatus may be designed in a cost-effective manner.

When, as stated in claim 8, the conveyor belt is driven at a speed, preferably a speed within the range of 20 m/min ― 100 m/min, whereby said force is exerted on the shellfish located on said surface of the belt, a further advantageous embodiment has been achieved.

When, as stated in claim 9, the apparatus comprises at least two, for example two, three, four, five or six, conveyor belts arranged with inclined belt parts, and wherein said conveyor belts are arranged consecutively e.g. whereby shellfish leaving a first conveyor belt are transferred to a second conveyor belt etc., an even further advantageous embodiment has been achieved. Hereby, an improved quality of the sorting process performed by the apparatus may be achieved as a certain fraction of the shellfish of the type to be separated from the main flow may be separated by the first conveyor belt. By the next conveyor belt, a further fraction of the remaining number of shellfish of the type to be separated from the main flow may be separated etc. until a satisfactory result is achieved.

When, as stated in claim 10, said at least two conveyor belts may have individually arranged inclinations and/or said at least two conveyor belts may be driven at individually arranged belt speeds, an further advantageous embodiment is achieved. Hereby, the sorting process performed by the apparatus may be fine-tuned step by step, providing an even further improvement in the quality of the sorting process.

The invention may for example be utilized to separate different species of shellfish from a batch or a flow of shellfish comprising for example heart clam or cockle (for example Cerastoderma edulis) and blue mussels (for example Mytulis edulis). Evidently, this is only an example of the shellfish which may be sorted by the invention.

### The figures

The invention will be described in further detail below with reference to the drawings of which
- fig. 1: shows a schematic drawing of some of the main components of an apparatus according to the invention from the side,
- fig. 2: is a side view of a further embodiment of a sorting apparatus according to the invention,
- fig. 3: is a view from the inlet end of a sorting apparatus according to the invention,
- fig. 4: is a view from the top of a sorting apparatus as illustrated in figs. 3 and 4, and
- fig. 5: is a side view of a modified embodiment of an apparatus according to the invention.

### Detailed description

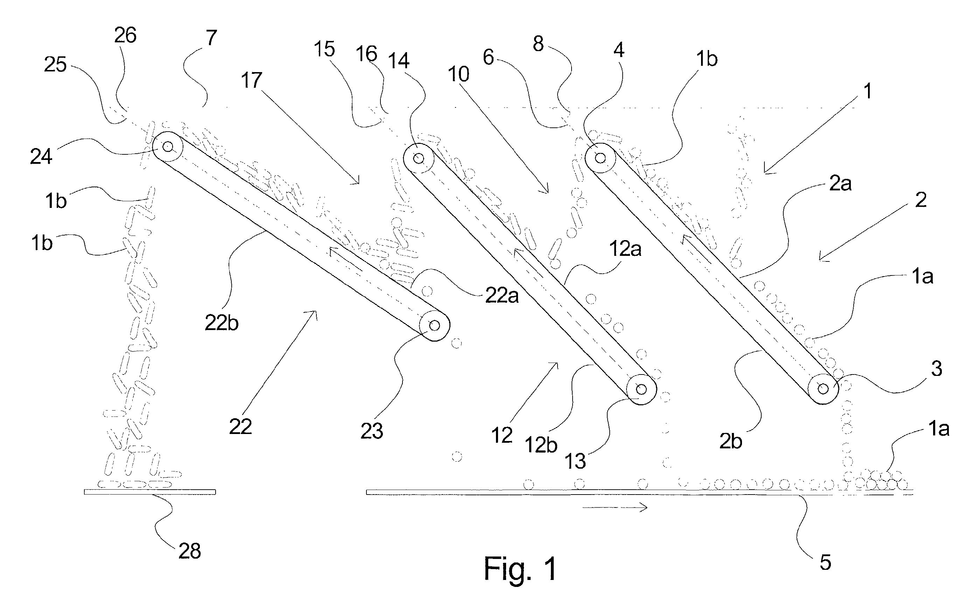

A method and an apparatus according to an embodiment of the invention will be described with reference to the illustrative side view of fig. 1. It should be understood that this illustration comprises only major parts of the apparatus and is not a comprehensive drawing of a sorting apparatus.

Shellfish from a batch of shellfish are delivered to the apparatus in a continuous or non-continuous stream 1 as illustrated. This batch or stream of shellfish may comprise two or more different species, sorts, sizes, shapes etc. of shellfish such as mussels, scallops, clams, oysters etc. In the shown example, the stream of shellfish comprises essentially two different types of shellfish 1a and 1b which are shown as an essentially round type 1a and an essentially elongated type 1b for illustrative purposes. As it will be explained later on, there may be more than two different types of shellfish in the batch to be sorted.

The stream of shellfish 1 is transferred to a conveyor belt 2 which is driven by a conveyor roller system having two rollers 3 and 4. One or both of these may be an electric drive motor, or the belt may be driven by any other suitable means. Further, it is obvious that more than two rollers may be utilized, for example in a triangular arrangement. However, in the illustrated arrangement, the conveyor belt 2 will define two essentially parallel planes or surfaces 2a and 2b. Of these, the upper one 2a will be driven in an upwards inclined direction as shown by the arrow. Due to the friction of the surface 2a of the conveyor belt 2 a force will be exerted on the shellfish located on the surface 2a, whereby the shellfish will be pushed towards the upper end of the conveyor belt 2.

The inclination of the conveyor belt 2 provided by an axis line 6 for the conveyor belt 2 and a horizontal line 7, whereby an inclination angle 8 is defined, may vary from a very small angle, for example 5°, to an angle providing a very steep inclination, for example 45° or even more. Preferably, inclinations within the range of 5°-35° may be utilized, and later even more specific preferred values for the angle of inclination will be given. The selected angle of inclination will have the effect that some of the shellfish on the surface 2a will slide or roll down the surface due to the force of gravity instead of being transported to the top of the conveyor belt 2. The likelihood of a given shellfish falling, e.g. roll and/or slide downwards at a given inclination and at a given belt speed will depend on the shape, the size, the weight etc. of the shellfish, and thus also on the species of the shellfish. In addition to the angle of inclination, the speed of the conveyor belt will influence the likelihood of a given shellfish falling downwards. Further, the material of the belt, e.g. the friction characteristics, and/or the design of the belt surface will be of importance in this connection. Also, the point along the conveyor belt on which the shellfish are introduced to the belt will have effect on the chances of a given shellfish reaching the top of the conveyor belt. Thus, a number of parameters may be varied and adjusted in relation to each other in order to obtain a preferred or desired result of a sorting process.

As is evident from the above, a number of the shellfish transferred to the conveyor belt 2 will fall down from the belt and be collected on e.g. a conveyor belt 5, which will transport these shellfish to further processing, packaging, further transport etc.

As illustrated, the conveyor belt 2 has been arranged in such a manner, e.g. with such an inclination, such a belt speed, such a choice of belt material etc. that all shellfish which fall down onto the collecting belt 5 will be of the same type 1a, e.g. the same species, size, weight or shape etc. Thus, the shellfish 1a collected on the collecting belt may not need further sorting before being further processed.

The shellfish which are transported to the top of the conveyor belt 2 may be of different shapes, species, sizes etc. and may thus need further sorting as illustrated. The flow of shellfish 10 leaving the top of the belt 2 thus contains both shellfish of types 1a and 1b. This flow or stream 10 is delivered to a second conveyor belt 12. This belt is similar to the former belt 2 and thus comprises two rollers 13, 14 and upper 12a and lower 12b belt surfaces. The second conveyor belt 12 will be arranged at an angle of inclination as defined by the angle 16 between the conveyor belt axis line 15 and the horizontal line 7. This angle of inclination may differ from or be similar to the angle of inclination of the former conveyor belt, and the belt speed of the second conveyor belt 12 may also differ from or be similar to the belt speed of the former conveyor belt 2.

As described in connection with the first conveyor belt 2, shellfish of the type 1a will for the most part fall down from the belt surface 12a and down on the collecting belt 5, while the shellfish of the type 1b and a small number of the shellfish of the type 1a will be transported to the top of the second conveyor belt 12, where they will fall down in a flow or stream 17.

As illustrated, the flow 17 of shellfish is transferred to a third conveyor belt 22, similar to the first and second conveyor belts. This third conveyor belt may be arranged at a belt speed and/or an inclination similar to or differing from the same parameters of the first 2 and/or the second conveyor belt 12, e.g. at an angle of inclination smaller than for the former conveyor belts as illustrated.

The parameters of the third conveyor belt, e.g. the angle of inclination, the belt speed, the choice and/or surface of the belt material, the point of transference of the flow 17 of shellfish, are selected in such a manner that the remaining part or essentially the remaining part of the shellfish of the type 1a will fall down onto the collecting belt 5, while the shellfish of the type 1b will be transported to the top of the conveyor belt 22, from which they will fall onto or into collecting or outlet means, for example in the form of an outlet conveyor belt 28.

It should be understood that more than three conveyor belts 2, 12 and 22 may be arranged in the sorting process and the apparatus, and that these may be of similar construction, size and shape or they may differ in design. Further, it should be understood that all of these conveyor belts may be adjusted similarly or individually in regard to inclination, belt speed etc. It should also be understood that such a setup may be static or adjusted e.g. by the user for example in dependence of the combination of types of shellfish contained in a given batch, of the preferred or required sorting process, of the contents of the fractions resulting from the sorting process etc.

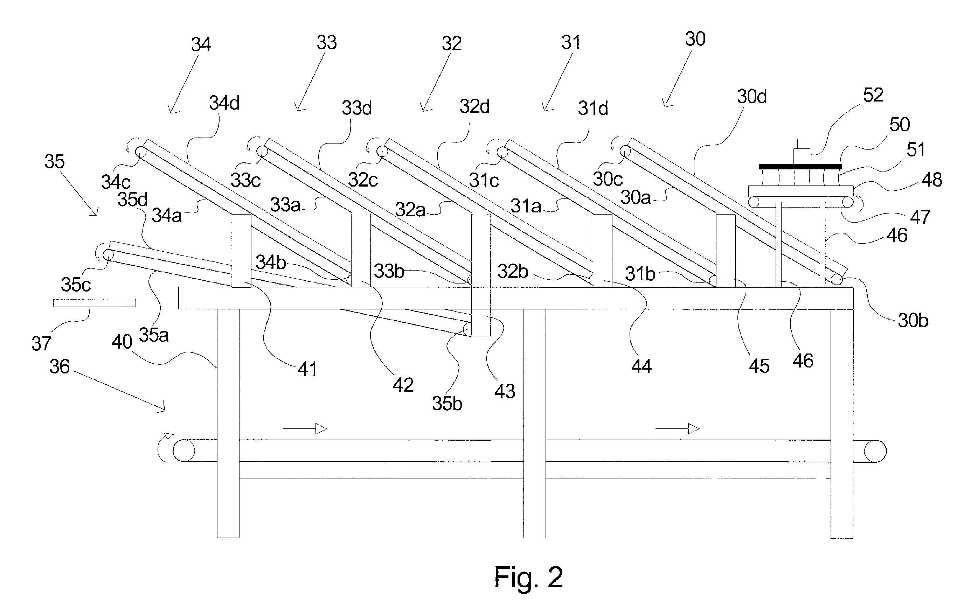

In fig. 2, a side view of a sorting apparatus according to a further embodiment of the invention is illustrated. Here, a number of sorting conveyor belt arrangements generally designated 30, 31, 32, 33, 34 and 35 are arranged consecutively in a common frame designated 40. These sorting conveyor belt arrangements each has a conveyor belt designated 30a, 31a, 32a etc. and two rollers designated respectively 30b and 30c, 31b and 31c, 32b and 32c etc. Finally, these sorting arrangements are supplied with shielding means 30d, 31d, 32d etc. at each side of the sorting conveyor belts in the illustrated embodiment in order to prevent the shellfish from falling down from the side of the belts.

The conveyor arrangements 30 ― 35 are arranged as independent constructions, each fastened to the frame 40 and in particular to frame posts 41, 42, 43, 44 and 45 in two positions on each side of each conveyor arrangement. These two positions are at the lower part of each conveyor and at a position between the two rollers, respectively. For example, the first conveyor arrangement may be fastened to the frame near the roller 30b and to a middle part to the frame post 45, the second conveyor arrangement may be fastened to the frame post 45 near the roller 31b and to a middle part to the frame post 44, etc. In this manner, the inclination of each of the sorting conveyor belt arrangements may be adjusted by lowering or raising the fastening position at the middle part to the frame posts 41 ― 45. Obviously, other manners of supporting the conveyor arrangements may be used which allows for adjustments.

Below the sorting conveyor belt arrangements, a collecting belt 36 is arranged, and below the upper end of the last of the sorting conveyor belt arrangements 35, an outlet belt 37 is arranged which may transport the fraction of shellfish leaving the sorting apparatus to the right or to the left of the apparatus as illustrated in the embodiment. Instead of a conveyor belt 37, other means of transport and/or collection may be arranged.

Finally, at the input end of the illustrated sorting apparatus, a shellfish delivery means is arranged. This comprises an essentially horizontal conveyor belt 47, arranged on two rollers and supported by a number of frame posts 46, in the shown embodiment two at each side. The conveyor belt 47 is driven at a relatively slow speed in the direction of the arrow, whereby shellfish delivered to the right hand end of the conveyor belt 47 by means of e.g. a chute, an input delivery conveyor belt or the like (not shown), are transported to the left hand end of the conveyor belt 47 from which they are dumped onto the first sorting conveyor belt arrangement 30. A pair of side shielding means 48 is provided as shown in order to prevent the shellfish from dropping over the side of the delivery belt 47.

Since the sorting apparatus has a substantial width, e.g. a width in the interval from approximately 1 m to 2m or more in order to achieve high efficiency and in order to achieve a satisfactory sorting process, special means for distributing the delivered shellfish over the whole width of the belts is advantageously provided. This means comprises a pair of distributing wheels 50 provided in a horizontal plane at a certain distance above the upper surface of the conveyor belt 47. These distributing wheels 50 comprise a number of distributing elements 51, e.g. finger-elements, which may have a certain degree of flexibility and which may be evenly distributed over the distributing wheels. The distributing wheels 50 are driven at a relatively slow speed for example by electric motors 52 or by other suitable means. More than two distributing wheels may be utilized, and obviously, the wheels may differ from the form illustrated.

The function of the shown apparatus will now be described. As explained, shellfish will enter the conveyor belt 47 in a more or less continuous flow or perhaps even in small batches. The conveyor belt 47 will move the shellfish towards the first sorting belt 30 while the distributing wheels 50 will simultaneously rotate slowly, preferably in a counter rotating manner, whereby the finger elements 51 will distribute the shellfish in a uniform arrangement over the whole width of the conveyor belt 47. Thus, it is not essential that the shellfish enter the conveyor belt in any particularly arranged manner.

When the shellfish reach the left hand end of the conveyor belt 47, they will fall down onto the first sorting conveyor belt 30a, for example as shown on an intermediate part of the belt. As explained in connection with fig. 1, some of the shellfish of a certain type will fall down onto the collecting conveyor belt 36, while the rest of the shellfish will be transported to the top of the conveyor belt 30a and fall down onto the next sorting conveyor belt 31a. This process will be repeated for the second 31, the third 32, the fourth 33 and the fifth 34 sorting conveyor belt arrangements. However, on the fifth conveyor belt, the shellfish leaving the conveyor belt 34 both at the upper part and the lower part will enter a sixth sorting conveyor belt arrangement 35. As shown, this may have a smaller inclination than the other conveyor belts, an increased length and may, of course, be driven at a different speed and/or involve a belt with different characteristics.

The shellfish leaving the upper part of this sixth sorting belt 35a will exclusively be shellfish of a certain predefined or required type, e.g. species, shape, size, weight etc., although a small number of shellfish of another type or types may be tolerated, and these may be removed manually, e.g. by a person controlling the quality of the sorted shellfish. Likewise, the shellfish leaving the lower part of this sixth sorting belt 35a and the lower parts of the other sorting belts and falling down on the collecting conveyor belt 36 will exclusively be shellfish of a certain predefined or required type, e.g. species, shape, size, weight etc. Similarly, a small number of shellfish of another type or types may be tolerated, and these may be removed manually, e.g. by a person controlling the quality of the shellfish sorted according to the invention.

The ability of the apparatus to perform a sorting of a batch of shellfish containing for example 50% of a first type of shellfish, e.g. 1a, and 50% of a second type of shellfish, e.g. 1b, will be demonstrated in theory in the following. Under certain circumstances, e.g. a certain belt speed and a certain angle of inclination, a sorting conveyor belt arrangement has proven to let 70% of the content of the first type of shellfish fall down at the lower end of the conveyor belt. Assuming that five consecutive sorting arrangements are used and that these are in essence similar to each other, the shellfish leaving the fifth conveyor belt at the upper end will only contain a 0,24% (app.) fraction of the first type of shellfish (≈0,3 X 0,3 X 0,3 X 0,3 X 0,3 X 0,5/0,5). The sixth sorting conveyor 35 will further reduce this amount which will result in a practically 100% sorting rate or a sorting result which will only need minor control work and/or manual removal of remaining shellfish of different types.

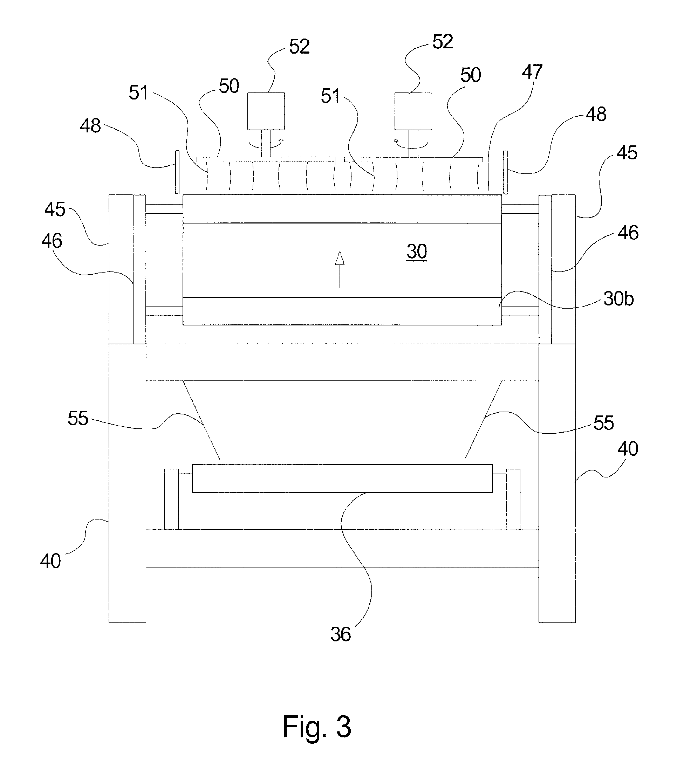

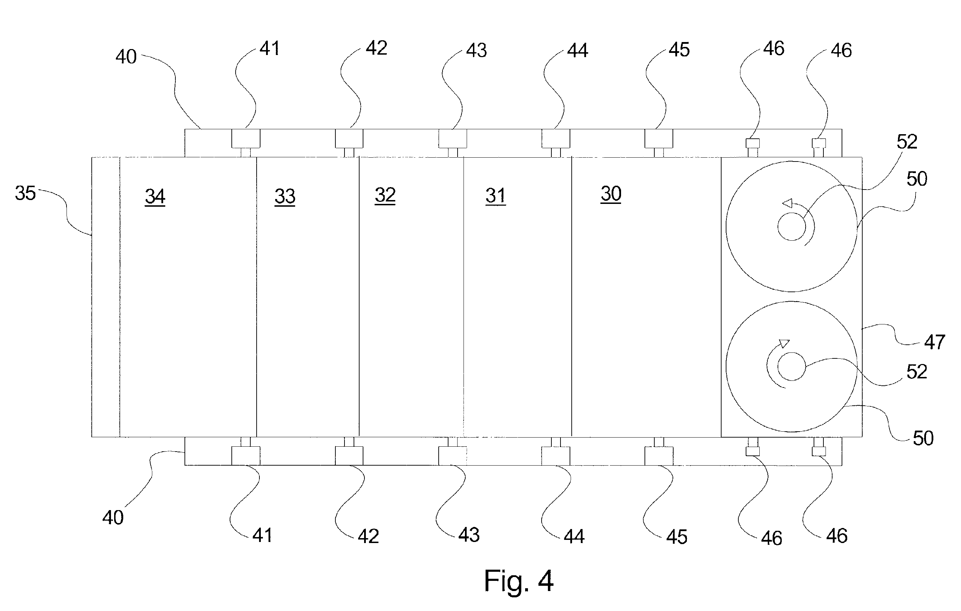

The apparatus shown in fig. 2 will now be explained in further detail with reference to figs. 3 and 4, of which fig. 3 shows the apparatus from the input end and fig. 4 shows the apparatus seen from the top.

In fig. 3, the frame 40 is illustrated, which frame 40 supports the collecting conveyor belt 36 near the bottom part. Above this belt 37, guiding means 55 are provided, e.g. in funnel shape, in order to lead the shellfish dropping down from the lower part of the sorting conveyor belts onto the collecting conveyor belt 36.

At the top of the sorting apparatus, the shellfish delivery means is illustrated and comprises the essentially horizontal conveyor belt 47 supported by frame posts 46. Further, the shielding means 48 is shown positioned at each side of the belt 47. Further, the two distributing wheels 50 with the distributing elements 51 driven by the drive means 52 are illustrated in a counter rotating manner. Finally, the lower part of the first sorting conveyor belt arrangement 30 is shown. Obviously, the upper part of this arrangement 30 will be partly protruding behind the shellfish delivery means, e.g. the conveyor belt 47 and the distributing arrangements, but for reason of clarity, this has been omitted in this drawing.

Fig. 4 shows the sorting apparatus from the top, showing the delivery conveyor belt 47 at the utmost right side, supported by the frame posts 46. Above this conveyor belt 47, the distributing arrangement comprising two distributing wheels 50 driven by motors 52 is illustrated. To the left of this, the sorting conveyor belt arrangements 30 ― 35 are shown in consecutive order, supported by the frame posts 46 ― 40, respectively, as explained above in connection with fig. 2.

In the embodiment illustrated in fig. 4, the conveyor belts involved are essentially of the same width. As explained above, this width may be in a range of 1m to 2m (app.) or more. However, a width smaller than 1m may evidently be used, depending on the actual use and objective. In a preferred embodiment, a width of 1,75m (app.) is employed. It will be obvious, however, to a skilled person that the width of the individual conveyor belts may differ from each other.

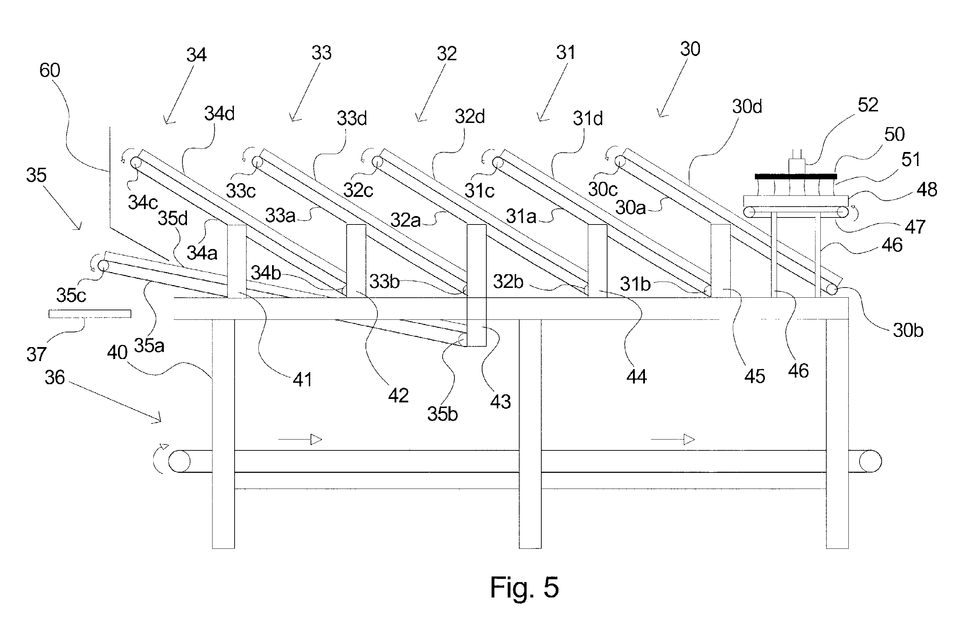

Fig 5 illustrates a further embodiment of a sorting apparatus according to the invention. This embodiment corresponds to the embodiment shown in fig. 2. Thus, the same reference numbers used in fig. 2 designate the elements. However, in the embodiment shown in fig. 5, guiding means in the form of a guiding plate 60 has been provided at the left hand end of the machinery, located between the output end of the fifth sorting conveyor belt arrangement 34 and the sixth sorting conveyor belt arrangement 35. The guiding plate 60 is arranged to prevent shellfish from falling directly from the output end of the fifth sorting conveyor belt arrangement 34 onto the conveyor belt 37, and more importantly to direct the shellfish entering the sixth sorting conveyor belt arrangement 35 with an initial speed in the opposite direction of the drive direction of the upper surface of the conveyor belt 35a. Hereby, an improved sorting or separation process is achieved, as the remaining (few) numbers of shellfish of the type led to the collecting conveyor belt 36, e.g. the type of shellfish more likely to roll (and/or slide) downwards, will be inclined to keep on rolling downwards while the other type or types of shellfish will relatively quickly become motionless in relation to the conveyor belt and will thus be transported to the upper end of the belt.

As it has been explained above, a method and an apparatus according to the invention may be utilized to separate two different types of shellfish comprised in a batch or a flow of shellfish. As explained, this may be achieved by adjusting the belt speed and/or the inclination of the belt which may be done individually for each sorting step and in dependence of the species involved: the shape, the size, the weight and/or characteristics of the shellfish involved. Further, other parameters may be altered, e.g. the belt structure, material etc, the point of delivery of the shellfish to the respective sorting belts etc. However, these parameters are usually not altered during normal procedure.

In a preferred embodiment, similar to the embodiment shown in fig. 5, the settings may be as indicated below for the six belts involved.

| Belt no. | Angle of inclination | | Belt speed | |
|---|---|---|---|---|
| | Range | Optimal | Range | Optimal |
| 1 ― 4 | 16°- 22° | 18° | 25 ― 60 m/min | 41 m/min |
| 5 | 16° - 25° | 19,5° | 25 ― 60 m/min | 53 m/min |
| 6 | 9° - 17° | 12° | 25 ― 60 m/min | 59 m/min |

Further, a setting of the belt speed at app. 6 m/min for the conveyor belt 47 involved in the distribution of the shellfish before the separation processes take place has proven to provide an advantageous results.

Obviously, the invention may also be utilized to separate more than two different types etc. of shellfish. For example, batches containing three different types may be sorted by initially separating a first type of shellfish by means of a set of separation conveyor belts which are adjusted to separate the first type of shellfish from the other types. The remaining batch or flow which will now essentially comprise two different types of shellfish may then be subjected to a further set of separation conveyor belts adjusted to separate the two types involved.

Alternatively, the first set of separation conveyor belts may sort out two types of shellfish whereby it is the batch or flow which is collected on the collecting conveyor belt that will be subjected to a sorting process involving a further set of separation conveyor belts.

Instead of using conveyor belts for the sorting or separation process, other means may be used. For example, the shellfish may be led to an inclined surface on which means have been provided to exert a force on the shellfish in an upwards direction. Such means may for example be fluid means, wire mesh means etc. Also, the inclined surface may be defined by a plate-shaped member which will serve as a support for the sorting process and for the means for exerting force on the shellfish. These means for exerting force on the shellfish may be in the form of a (thin) belt or similar means which is dragged along the surface of the plate-shaped member. Other means which will be obvious to a skilled person may also be used.

Further, it should be mentioned that two or more sorting machines might be placed in parallel, whereby the capacity of the sorting machinery will be increased while giving the advantage that delivery and/or collecting means, such as conveyor belts, may be used in common by the separation machinery involved.

In the above, the invention has been explained in detail with reference to specific embodiments and as illustrated in the drawings. As it will obvious to the skilled person, the invention may be performed in many other forms and variations and should not be limited to the examples of the invention illustrated above. The scope of the invention will be defined by the claims.

## Claims

1. A method of sorting shellfish comprising the steps of
- transferring the shellfish to an inclined surface,
- exerting force on the shellfish on said surface in an at least partially upwardly inclined direction and at least partially parallel with the inclined surface,
- collecting the shellfish leaving said surface at or near an upper end and/or at or near a lower end of the surface.

2. Method according to claim 1,**characterized in that** said force exerted on the shellfish on the surface is produced by the surface or by a part of said surface, e.g. the surface of a conveyor belt or similar transport means, being moved in an upwardly inclined direction.

3. Method according to claim 1 or 2, **characterized in that** the inclination of said surface is adjustable, preferably within the range of 5° - 35°, and/or whereby the force exerted by the surface, e.g. achieved by moving the surface, may be adjustable, e.g. by adjusting the speed of said surface or said part of the surface, preferably within the range of 20 m/min ― 100 m/min.

4. Method according to claim 1, 2 or 3, **characterized in that** the steps of
- transferring the shellfish to an inclined surface,
- exerting force on the shellfish on said surface in an upwards direction and at least partially parallel with the inclined surface,
- collecting the shellfish leaving said surface at or near an upper and/or a lower end of the surface
are repeated at least one time for shellfish leaving a first surface at the upper end and/or at the lower end, and whereby the repeated steps are performed by using a further inclined surface or further inclined surfaces, e.g. a second, a third etc. inclined surface.

5. Method according to claim 4, **characterized in that** the inclination of the surface and/or the force exerted, e.g. the speed of said surface or a part of said surface, may be adjusted individually for the first surface and/or for said further inclined surface or said further inclined surfaces.

6. An apparatus for sorting shellfish comprising
- an inclined surface,
- means for transferring shellfish to the inclined surface,
- means for exerting force on the shellfish on said surface in an at least partially upwardly inclined direction and at least partially parallel with the inclined surface, and
- means for collecting the shellfish leaving said surface at or near an upper end and/or at or near a lower end of the surface.

7. Apparatus according to claim 6, **characterized in that** the apparatus comprises a conveyor belt and that a part of said conveyor belt constitutes said inclined surface which may be arranged at an inclination in a preferred range of 5°-35°.

8. Apparatus according to claim 7,**characterized in that** the conveyor belt is driven at a speed, preferably a speed within the range of 20 m/min - 100 m/min, whereby said force is exerted on the shellfish located on said surface of the belt.

9. Apparatus according to claims 6, 7 or 8,**characterized in that** the apparatus comprises at least two, for example two, three, four, five or six, conveyor belts arranged with inclined belt parts, wherein said conveyor belts are arranged consecutively, e.g. whereby shellfish leaving a first conveyor belt are transferred to a second conveyor belt etc.

10. Apparatus according to claim 9, **characterized in that** said at least two conveyor belts may have individually arranged inclinations and/or **in that** said at least two conveyor belts may be driven at individually arranged belt speeds.
